# EUROPEAN PATENT SPECIFICATION

(11) **EP 1 808 720 B1**
(45) Date of publication and mention of the grant of the patent: **12.08.2009**
(21) Application number: 07000082.3
(22) Date of filing: 03.01.2007
(51) Int. Cl.: G02B 21/00, G02B 21/26

(54) **Examination apparatus**
Prüfvorrichtung
Appareil d'examen

(30) Priority: 12.01.2006 JP 2006004883
(43) Date of publication of application: 18.07.2007
(73) Proprietor: Olympus Corporation, Tokyo 151-0072 (JP); OLYMPUS MEDICAL SYSTEMS CORP., Shibuya-ku Tokyo 151-0072 (JP)
(72) Inventor: Honda, Susumu, Hachioji-shi Tokyo 192-0046 (JP); Natori, Yasuaki, Hachioji-shi Tokyo 193-0816 (JP); Sasaoka, Chino, Hachioji-shi Tokyo 192-0913 (JP); Kawano, Yoshihiro, Fuchu-shi Tokyo 183-0035 (JP); Kaji, Hinako, Hachioji-shi Tokyo 192-0023 (JP)
(74) Representative: von Hellfeld, Axel

(56) References cited:
- EP-A- 1 586 930
- WO-A-86/03847
- US-A- 3 401 999
- US-A- 6 085 581
- US-A1- 2004 223 213

## Description

### BACKGROUND OF THE INVENTION

### 1. FIELD OF THE INVENTION

The present invention relates to an examination apparatus, such as a microscope apparatus, provided with a movable stage on which a specimen is mounted.

This application is based on Japanese Patent Application No. 2006-004883.

### 2. DESCRIPTION OF RELATED ART

Microscope apparatuses including a movable stage to mount a specimen, a probe microscope with a high-powered optical system, and a stereomicroscope with a low-powered optical system are known (refer to, for example, Japanese Unexamined Patent Application, Publication No. 2004-325868). These microscope apparatuses are constructed so that the probe microscope and the stereomicroscope for examining a specimen are fixed and the stage is moved relative to the fixed probe microscope and stereomicroscope to change an examination site of the specimen or to focus on the examination site.

According to the microscope apparatus described in Japanese Unexamined Patent Application, Publication No. 2004-325868, which includes a probe microscope having a small field of view and a stereomicroscope having a large field of view, not only can the same examination site be viewed from the same direction, but also larger fields of view can be achieved by minimizing mutual blocking of the fields of view.

In the case of a specimen such as a small laboratory animal, however, it is sometimes desired to continuously observe the same examination site while the operator is moving the specimen. For example, in the case of a small laboratory animal, heartbeats or peristaltic motion of organs may interfere with examination. Adverse effect of such pulsating motion at the examination site can be avoided to some degree by changing the orientation of the small laboratory animal to make examination easier.

Furthermore, it may also be desired that while displaying a magnified view of the examination site and its vicinity for examination using a microscope having higher magnification than that of the stereomicroscope having a large field of view, examination be performed using a probe microscope having even higher magnification. For example, when an organ of the small laboratory animal is to be examined, it is necessary that while the entire organ is observed with a certain level of magnification, the examination site and its vicinity be observed with even higher magnification.

The microscope apparatus described in Japanese Unexamined Patent Application, Publication No. 2004-325868 is problematic in that it cannot meet these demands. More specifically, moving the small laboratory animal by operating the stage causes a change in the positions of the probe microscope and the stereomicroscope relative to the small laboratory animal, and because of this, the same position cannot be examined continuously. Furthermore, if a magnified view of the entire organ is displayed for examination using a microscope having higher magnification than that of the stereomicroscope, moving the small laboratory animal by operating the stage undesirably causes the organ to easily go out of the small field of view, and therefore, the operator easily loses sight of the tip of the probe microscope.

Document US 2004/0223213 A1 concerns a microscopic observing apparatus comprising a probe microscope and a stereoscopic microscope. Both microscopes are fixed to a base of the microscopic observing apparatus.

Document WO 86/03847 discloses an incident and/or translucent light microscope. In one embodiment, the microscope is fixed to a movable stage.

Document US 3,401,999 concerns a microscope comprising a stage which can be moved together with a microscope around an axis.

Document EP 1 586 930 A1 concerns a system microscope comprising an inverted microscope and a microscope with an upright frame. The system further comprises a fixed stage.

### BRIEF SUMMARY OF THE INVENTION

An object of the present invention is to provide an examination apparatus that allows examination to be continued without losing sight of the examination site while the operator is moving a specimen by operating a stage.

Some or all of the above problems are overcome by an examination apparatus having the features of claim 1.

The present invention provides an examination apparatus which includes a base; a stage for mounting thereon a specimen, the stage being movable relative to the base; and a movable image acquisition apparatus for acquiring an image of the specimen, the movable image acquisition apparatus being fixed on the stage.

According to this examination apparatus, the movable image acquisition apparatus fixed on the stage moves as the stage is moved, and therefore, the operator can continue to observe the same position without causing the field of view to be changed, irrespective of whether the operator moves the specimen. This is advantageous particularly in continuing to observe the same examination site while the orientation of the specimen is being changed by moving the specimen.

The examination apparatus further includes a stationary image acquisition apparatus that is fixed on the base to acquire an image of the specimen on the stage.

By doing so, not only can the operator continue to observe the same position of the specimen with the movable image acquisition apparatus irrespective of whether the stage is moved, but also the operator can change the examination site to be observed with the stationary image acquisition apparatus by moving the stage.

In the examination apparatus, the magnification of the stationary image acquisition apparatus is higher than the magnification of the movable image acquisition apparatus.

By doing so, the same position can be observed in a larger field of view by using the movable image acquisition apparatus, which moves along with the specimen on the stage, whereas an image magnified at high magnification can be acquired by using the stationary image acquisition apparatus where the examination site changes as the stages moves. As a result, if the examination site of the stationary image acquisition apparatus is located in the field of view of the movable image acquisition apparatus, examination can be continued with the movable image acquisition apparatus without losing sight of the examination site of the stationary image acquisition apparatus even though the examination site of the stationary image acquisition apparatus is changed along with the movement of the stage. Consequently, the original examination site can be restored easily by using the stationary image acquisition apparatus.

In the examination apparatus, the stage includes a table on which the specimen can be mounted, and preferably, the tilt angle of the table can be universally changed.

The specimen to be mounted on the stage is a small laboratory animal.

The examination apparatus may further include an anesthesia apparatus for anesthetizing the small laboratory animal.

According to the present invention, examination can be continued without losing sight of the examination site while the operator is moving the specimen by operating the stage.

### BRIEF DESCRIPTION OF THE SEVERAL VIEWS OF THE DRAWINGS

Fig. 1 is a diagram depicting an examination apparatus according to one embodiment of the present invention.

Fig. 2 is a longitudinal sectional view of a trocar used for examination with the examination apparatus shown in Fig. 1.

### DETAILED DESCRIPTION OF THE INVENTION

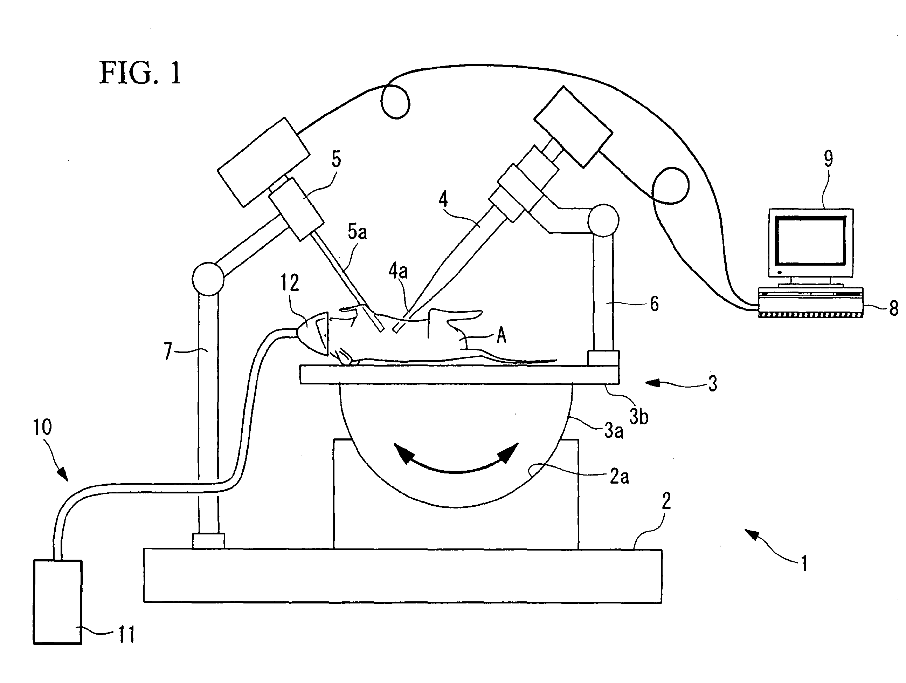

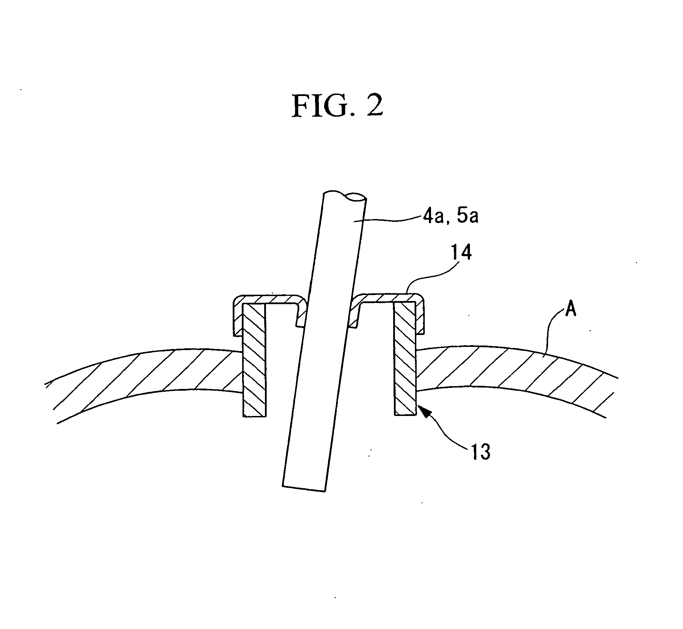

An examination apparatus 1 according to one embodiment of the present invention will now be described with reference to Figs. 1 and 2.

Referring to Fig. 1, the examination apparatus 1 according to this embodiment includes a base 2; a stage 3 which is movable relative to the base 2 and on which a specimen, such as a small laboratory animal A, is mounted; a first image acquisition apparatus (movable image acquisition apparatus) 4 fixed on the stage 3; and a second image acquisition apparatus (stationary image acquisition apparatus) 5 fixed on the base 2.

The stage 3 is a so-called gonio-stage which includes, for example, a substantially hemispherical bottom surface 3a and a table 3b on which the small laboratory animal A is mounted. The substantially hemispherical bottom surface 3a is fitted in a concavity 2a formed on the base 2 so that the tilt angle of the table 3b can be universally changed by sliding the bottom surface 3a relative to the concavity 2a.

The above-described first image acquisition apparatus 4 is a low-powered microscope apparatus for macro observation, which includes a small-diameter end portion 4a that can be inserted into the body of the small laboratory animal A through an incision made in the skin of the small laboratory animal A. Illumination light is emitted from, for example, the tip of the small-diameter end portion 4a and an image is formed of reflected light returning from inside the body of the small laboratory animal A.

The above-described second image acquisition apparatus 5 is a fluorescence microscope apparatus for micro observation, having a magnification higher than that of the first image acquisition apparatus 4. This second image acquisition apparatus 5 also includes a small-diameter end portion 5a that can be inserted into the body of the small laboratory animal A. Excitation light is emitted from, for example, the tip of the small-diameter end portion 5a, and fluorescence returning from inside the body of the small laboratory animal A is detected.

These first and second image acquisition apparatuses 4 and 5 are fixed on the stage 3 and the base 2, respectively, by means of respective stands 6 and 7 having connection mechanisms. The respective small-diameter end portions 4a and 5a of the image acquisition apparatuses 4 and 5 can be set and fixed at any position and orientation by operating the stands 6 and 7, respectively.

Furthermore, the first and second image acquisition apparatuses 4 and 5 are connected to an image processing apparatus 8 so that images acquired by the image acquisition apparatuses 4 and 5 are processed in the image processing apparatus 8 and then displayed on a monitor 9 either simultaneously or individually by switching between the images.

In addition, the stage 3 is provided with an anesthesia apparatus 10 for anesthetizing the small laboratory animal A.

The anesthesia apparatus 10 includes an anesthetic supply unit 11 for supplying anesthetic and a mask 12 which is placed on the head of the small laboratory animal A. Furthermore, a heater, not shown in the figure, is built into the stage 3. The heater prevents an anesthesia-induced decrease in body temperature of the small laboratory animal A to maintain the animal A in a healthy state for examination.

The operation of the examination apparatus 1 according to this embodiment with the above-described structure will be described below.

In order to perform in-vivo examination of the small laboratory animal A, such as a mouse, using the examination apparatus 1 according to this embodiment, the small laboratory animal A is first immobilized on the table 3b of the stage 3, then the mask 12 is placed on the head of the small laboratory animal A, and finally the anesthetic supply unit 11 is operated. By doing so, the small laboratory animal A is kept in an anesthetized state. At this time, the heater of the stage 3 is operated to keep the healthy condition of the small laboratory animal A because there is danger of an anesthesia-induced decrease in the body temperature of the small laboratory animal A.

Next, the skin of the small laboratory animal A is incised at two sites, one for the first image acquisition apparatus 4 and the other for the second image acquisition apparatus 5, and a trocar 13 is fixed at the site of each incision in the skin, as shown in Fig. 2, so that the small-diameter end portions 4a and 5a can be inserted into the body of the small laboratory animal A. The trocars 13 each have a sealing member 14 made of flexible material, such as rubber, through which the small-diameter end portions 4a and 5a can pass. By doing so, not only can the tip of each of the small-diameter end portions 4a and 5a be moved freely through the sealing member 14, but also the gap between the trocar 13 and each of the small-diameter end portions 4a and 5a can be hermetically sealed by the sealing member 14.

First, the small-diameter end portion 4a of the first image acquisition apparatus 4 mounted on the stage 3 is inserted into the small laboratory animal A through the sealing member 14 of the corresponding trocar 13 to acquire an image of an object to be examined, that is, an entire organ in the field of view, and then the acquired image is sent to the image processing apparatus 8. The image processing apparatus 8 processes the received image and displays it on the monitor 9.

While observing the image displayed on the monitor 9, the operator looks for an examination site of the organ and operates the stand 6 that fixes the first image acquisition apparatus 4 on the stage 3 to adjust the position of the small-diameter end portion 4a. When the examination site is found, the position of the small-diameter end portion 4a is readjusted so that the examination site comes to a substantially central position in the field of view. Furthermore, if the found examination site pulsates due to, for example, heartbeats, the stage 3 is moved to re-orient the small laboratory animal A so that examination is less adversely affected by the pulsation. According to this embodiment, since the stage 3 is realized by a gonio-stage, its tilt angle can be changed easily.

In this state, the stand 6, which fixes the second image acquisition apparatus 5 on the base 2, is operated to insert the small-diameter end portion 5a into the small laboratory animal A through the sealing member 14 of the corresponding trocar 13. In this manner, the gaps around the percutaneously inserted small-diameter end portions 4a and 5a are sealed by the sealing members 14 of the trocars 13. In this state, air is percutaneously supplied into the small laboratory animal A using, for example, a syringe. By doing so, the body cavity of the small laboratory animal A is inflated, which makes it easier to move the small-diameter end portions 4a and 5a.

Thereafter, in this state, the small-diameter end portion 5a of the second image acquisition apparatus 5 is moved to bring its tip near the examination site. By doing so, the small-diameter end portion 5a of the second image acquisition apparatus 5 appears in the field of view of the first image acquisition apparatus 4. In this state, the second image acquisition apparatus 5 is operated to acquire a magnified image of the examination site. The acquired image is sent to the image processing apparatus 8 and displayed on the monitor 9.

Since the small-diameter end portion 5a of the second image acquisition apparatus 5 is disposed in the field of view of the first image acquisition apparatus 4, the operator can adjust the position of the small-diameter end portion 5a of the second image acquisition apparatus 5 while confirming the image on the monitor 9 that is acquired by the first image acquisition apparatus 4. In this state, when the examination site of the second image acquisition apparatus 5 is to be changed to another site, the stage 3 is operated to move the small laboratory animal A relative to the small-diameter end portion 5a of the second image acquisition apparatus 5.

In this case, according to the examination apparatus 1 of this embodiment, since the first image acquisition apparatus 4 for acquiring a relatively wide-range image, such as an image of an entire organ, in the body of the small laboratory animal A is fixed on the stage 3, the image acquired by the first image acquisition apparatus 4 does not change, irrespective of whether the stage 3 is moved. In other words, the first image acquisition apparatus 4 can continue to display the same image even when the stage 3 is moved.

Therefore, the small-diameter end portion 5a of the second image acquisition apparatus 5 appears on the monitor 9 as if it were moving in a still image when the stage 3 is operated while an image of the entire organ, including the examination site, acquired by the first image acquisition apparatus 4 is being displayed on the monitor 9.
Consequently, the examination site is prevented from going out of the field of view, which makes examination easier.

In the present invention, the stage 3 is realized by, but not limited to, a gonio-stage. The stage 3 can be realized by another type of stage, such as an XY stage. In addition, the first image acquisition apparatus 4 is not limited to those which are inserted into the body of the small laboratory animal A. Furthermore, the small-diameter end portions 4a and 5a may be realized by a fiber scope made of a fiber bundle, as well as a rigid scope provided with a metal tube barrel.

## Claims

1. An examination apparatus (1) for examining a small laboratory animal comprising:
a base (2) for fixing the examination apparatus (1);
a stage (3) including a table (3b) for mounting thereon the small laboratory animal (A), the stage (3) being movable relative to the base (2);
a movable microscope apparatus (4) configured to acquire an image of the small laboratory animal (A), the movable microscope apparatus (4) being fixed to the stage (3) so as to be movable together with the stage (3); and
a stationary microscope apparatus (5) configured to acquire an image of the small laboratory animal (A) on the table (3b), the stationary microscope apparatus (5) being fixed to the base (2) and having a magnification higher than that of the movable microscope apparatus (4).

2. The examination apparatus according to claim 1, wherein the tilt angle of the table (3b) can be universally changed.

3. The examination apparatus according to claim 1 or 2, further comprising an anesthesia apparatus (10) for anesthetizing the small laboratory animal (A).

## Patentansprüche

1. Überwachungsvorrichtung (1) zum Überwachen kleiner Versuchstiere, folgendes aufweisend:
eine Basis (2) zum Abstellen der Überwachungsvorrichtung (1),
eine Bühne (3) mit einem Tisch (3b) zum Ablegen des kleinen Versuchstieres (A) darauf, wobei die Bühne (3) relativ zur Basis (2) bewegbar ist;
eine bewegbare Mikroskopvorrichtung (4) die ausgelegt ist, um ein Bild des kleinen Versuchstieres (A) aufzunehmen, wobei die bewegbare Mikroskopvorrichtung (4) so mit der Bühne (3) verbunden ist, dass sie zusammen mit der Bühne (3) bewegbar ist; und
eine stationäre Mikroskopvorrichtung (5), die ausgelegt ist, ein Bild des kleinen Versuchstieres (A) auf dem Tisch (3b) aufzunehmen, wobei die stationäre Mikroskopvorrichtung (5) mit der Basis (2) verbunden ist und eine Vergrößerung hat, die größer ist als die der bewegbaren Mikroskopvorrichtung (4).

2. Überwachungsvorrichtung gemäß Anspruch 1, wobei der Neigungswinkel des Tisches (3b) universell änderbar ist.

3. Überwachungsvorrichtung gemäß einem der Ansprüche 1 oder 2, mit weiterhin einer Anästhesievorrichtung (10) zum Anästhesieren des kleinen Versuchstieres (A).

## Revendications

1. Appareil d'examen (1) destinée à examiner un petit animal de laboratoire comprenant :
une base (2) destinée à fixer l'appareil d'examen (1) ;
un plateau (3) comprenant une tablette (3b) pour poser sur celle-ci le petit animal de laboratoire (A), le plateau (3) étant mobile par rapport à la base (2) ;
un microscope mobile (4) configuré pour acquérir une image du petit animal de laboratoire (A), le microscope mobile (4) étant fixé au plateau (3) de façon à être mobile conjointement avec le plateau (3) ; et
un microscope fixe (5) configuré pour acquérir une image du petit animal de laboratoire (A) sur la tablette (3b), le microscope fixe (5) étant fixé à la base (2) et possédant un grossissement supérieur à celui du microscope mobile (4).

2. Appareil d'examen selon la revendication 1, dans lequel l'angle d'inclinaison de la tablette (3b) peut être changé de manière universelle.

3. Appareil d'examen selon la revendication 1 ou 2, comprenant en outre un appareil d'anesthésie (10) destiné à anesthésier le petit animal de laboratoire (A).
